# EUROPÄISCHE PATENTSCHRIFT

(11) **EP 2 330 332 B1**
(45) Veröffentlichungstag und Bekanntmachung des Hinweises auf die Patenterteilung: **08.06.2016**
(21) Anmeldenummer: 10014742.0
(22) Anmeldetag: 18.11.2010
(51) Int. Cl.: F16L 55/40, G01N 23/00, B23K 31/12, B23K 37/02, G01N 23/18

(54) **Vorrichtung zum Prüfen und/oder Schweißen eines Rohrs entlang einer Schweißnaht**
Device for inspecting and/or welding a pipe along a weld seam
Dispositif de contrôle et/ou de soudage d'un tuyau le long d'un cordon de soudure

(30) Priorität: 19.11.2009 DE 202009015516 U
(43) Veröffentlichungstag der Anmeldung: 08.06.2011
(73) Patentinhaber: GE Sensing & Inspection Technologies GmbH, 50354 Hürth (DE)
(72) Erfinder: Matzen, Hans-Uwe, 22927 Grosshansdorf (DE); Wüstenbecker, Michael, 22952 Lütjensee (DE); Krämer, Jan, 23568 Lübeck (DE)
(74) Vertreter: Patentanwälte Bauer Vorberg Kayser

(56) Entgegenhaltungen:
- WO-A1-96/26887
- WO-A1-97/46873
- DE-A1-102008 013 203
- US-A- 4 078 180
- US-A- 6 035 786

## Beschreibung

Die Erfindung betrifft eine Vorrichtung zum Prüfen und/oder Schweißen eines Rohrs entlang einer Schweißnaht, umfassend einen zur freitragenden Aufhängung eingerichteten, zum Einbringen in das Innere eines zu prüfenden Rohrs vorgesehenen Kragarm mit einem rohrförmigen Grundkörper, und an dem Kragarm angeordnete Tragmittel für eine Prüf- und/ oder Schweißeinrichtung.

Vorrichtungen zur Schweißnahtprüfung von Stahlrohren mit einem starren Kragarm sind beispielsweise aus US 4 078 180 und der DE 27 06 346 B2 bekannt, wobei die Länge des Kragarms mindestens der größten Länge eines zu prüfenden Rohres von beispielsweise 10 m und mehr entspricht. Um eine ausreichende Stabilität an dem freien Ende des Kragarms zu gewährleisten und unerwünschte Schwingungen zu unterdrücken, muss der in der Regel aus Stahl gefertigte Kragarm eine ausreichend große Dimensionierung aufweisen. Angesichts des von dem schweren Kragarm ausgeübten Hebelmoments müssen auch das Traggestell für den Kragarm und entsprechende Verbindungsmittel erhebliche Dimensionierungen aufweisen. Der gesamte Aufbau ist entsprechend massiv und kostenträchtig.

Aus der WO 97 46873 A1 ist eine baulich sehr aufwändige Anlage zur Schweißnahtprüfung von Stahlrohren bekannt, die zwei spiegelbildlich zueinander angeordnete, unabhängig voneinander verfahrbare Kragarmanordnungen mit jeweils einer Prüfvorrichtung aufweist, wobei jeder Kragarm jeweils nur etwas länger als die halbe größte Länge eines zu prüfenden Rohres ist.

Die Aufgabe der Erfindung besteht darin, eine Prüf- und/oder Schweißvorrichtung mit reduziertem baulichem Aufwand bereitzustellen, wobei eine ausreichende Stabilität an dem freien Ende des Kragarms gewährleistet ist und unerwünschte Schwingungen vermieden werden.

Die Erfindung löst diese Aufgabe mit den Mitteln der unabhängigen Ansprüche. Aufgrund der Verwendung eines faserverstärkten Kunststoffs kann das Gewicht des Kragarms gegenüber einem herkömmlichen Kragarm aus Stahl, und dadurch der bauliche Aufwand insgesamt, ganz erheblich reduziert werden. Überraschenderweise haben Versuche ergeben, dass die Erfindung nicht zulasten der Festigkeit und Stabilität des Kragarms geht, sondern die Zugfestigkeit und damit die Stabilität, sowie die Schwingungsunterdrückung an dem freien Ende des Kragarms sogar noch größer sind als bei einem herkömmlichen Grundkörper aus Stahl.

Vorzugsweise weist der Grundkörper des Kragarms in Richtung zum freien Ende hin eine im Wesentlichen kontinuierlich abnehmende Material- bzw. Wandstärke auf. Dadurch kann das Gewicht des Kragarms insgesamt bei ausreichender Festigkeit vorteilhafterweise noch weiter reduziert werden. Dieses Merkmal der Erfindung ist bei herkömmlichen Stahlrohren nur mit außerordentlichem Aufwand realisierbar und stellt daher eine erhebliche Verbesserung gegenüber dem Stand der Technik dar. Die abnehmende Materialstärke kann dabei vorzugsweise über im Wesentlichen die gesamte Länge des Grundkörpers, oder nur über einen Längenabschnitt von beispielsweise mindestens 50% der Länge des Grundkörpers, realisiert sein. Im Wesentlichen kontinuierlich bedeutet, dass allenfalls geringe herstellungsbedingte Abstufungen insbesondere im sub-mm-Bereich auftreten.

Vorzugsweise umfasst das Tragmittel einen in einen entlang des Kragarms verschiebbar geführten Schlitten, der zweckmäßigerweise eine Aufnahme für eine Prüfeinrichtung und/oder eine Schweißeinrichtung aufweist. Um eine Stromversorgung einer auf dem Schlitten montierten Prüf- und/ oder Schweißeinrichtung ohne störende Kabelverbindungen zu ermöglichen, ist vorzugsweise entlang dem Kragarm eine Kabelnachführeinrichtung für den Schlitten, beispielsweise eine Kabelkette oder ein Kabelschlepp, angeordnet.

Der faserverstärkte Kunststoff ist vorzugsweise ein Kohlenstofffaserverstärkter Kunststoff (CFK), es kann sich jedoch beispielsweise auch um einen Glasfaserverstärkten Kunststoff (GFK) oder einen anderen geeigneten faserverstärkten Kunststoff handeln. Als Matrix wird vorzugsweise ein Duroplastwerkstoff und/oder Epoxidharz, oder ein geeigneter Thermoplastwerkstoff verwendet.

Eine bevorzugte Anwendung der Erfindung betrifft eine Vorrichtung zum Prüfen einer Rohrschweißnaht mittels Röntgenstrahlung. Dabei ist vorzugsweise eine Röntgeneinrichtung, insbesondere ein Röntgendetektor, alternativ eine Röntgenröhre, auf einem längsverschiebbar geführten Schlitten auf dem Kragarm montiert. Alternativ kann auch eine Röntgeneinrichtung, insbesondere eine Röntgenröhre, fest auf dem Kragarm montiert sein.

Zusätzlich oder alternativ zu einem Röntgendetektor können auch Röntgenfilme zur Aufzeichnung der Röntgenstrahlung verwendet werden. In diesem Fall umfasst das Tragmittel vorzugsweise ein Transportmittel, beispielsweise ein Transportband oder -seil, mit Aufnahmen für die Röntgenfilme. In einer bevorzugten Ausführungsform ist die Prüfvorrichtung sowohl für die Verwendung eines Röntgendetektors als auch von Röntgenfilmen eingerichtet. In diesem Fall dient vorzugsweise das Transportmittel zum Antrieb des Schlittens, so dass ein separater Antrieb für den Schlitten entbehrlich ist.

Die Erfindung ist nicht auf Röntgenprüfung beschränkt. Auch eine Anwendung beispielsweise für Ultraschallprüfung oder andere geeignete Prüfeinrichtungen ist denkbar.

Die Erfindung ist des Weiteren nicht beschränkt auf die Prüfung einer Rohrschweißnaht, sondern kann auch zum Schweißen eines Rohrs entlang einer Schweißnaht verwendet werden. In diesem Fall ist auf dem Kragarm zweckmäßigerweise eine Schweißeinrichtung angeordnet. Auch eine kombinierte Schweiß- und Prüfvorrichtung ist denkbar, wobei entweder eine Schweißeinrichtung und eine Prüfeinrichtung auf dem Kragarm montiert sind, oder der Kragarm von einer Schweißeinrichtung auf eine Prüfeinrichtung umrüstbar ist.

Die Erfindung wird im Folgenden anhand vorteilhafter Ausfüh-rungsformen unter Bezugnahme auf die beigefügten Figuren erläutert. Dabei zeigt:
- Fig. 1:: eine perspektivische Ansicht einer Schweißnahtprüfvorrichtung; und
- Fig. 2:: eine Querschnittsansicht durch den Kragarm der Schweißnahtprüfvorrichtung aus Fig. 1.

Die Anlage 10 zur Prüfung einer Längsschweißnaht eines beispielsweise im Pipelinebau verwendeten Stahlrohrs 11 mit einer Länge von insbesondere 5 m und mehr, vorzugsweise 10 m und mehr, beispielsweise etwa 6 m, 12m, 18 m und/oder 24 m, umfasst einen Kragarm 12, dessen Länge an die maximale Länge eines zu prüfenden Stahlrohrs 11 angepasst ist und diese insbesondere übertrifft, insbesondere also länger als 5 m, vorzugsweise länger als 10 m ist. Der Kragarm 12 ist an seinem einen Ende 13, das beispielsweise von einem Befestigungsflansch 25 gebildet wird, an einem nur schematisch angedeuteten Traggestell 14 befestigt und an seinem anderen Ende 15 freitragend, wobei das freie Ende 15 während einer Schweißnahtprüfung mittels einer nicht gezeigten Stütze unterstützt werden kann. Der Kragarm kann fest an dem Traggestell 14 befestigt sein. In einer alternativen Ausführungsform kann das Traggestell 14 beispielsweise elektrische oder hydraulische Mittel zur Höhenverstellung des Kragarms 12 entlang dem Traggestell aufweisen.

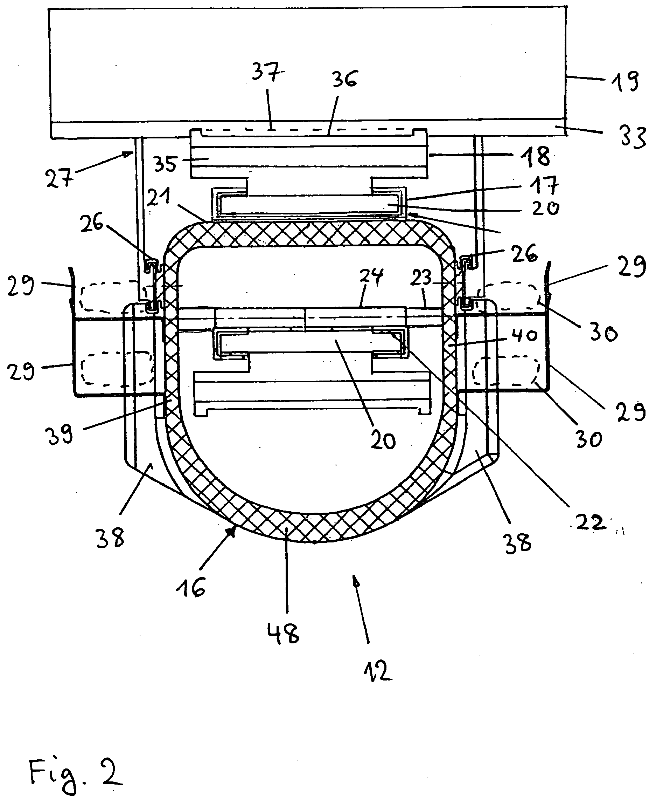

Der Kragarm 12 wird im Wesentlichen von einem vorzugsweise als geschlossenes Hohlprofil ausgebildeten Grundkörper 16 gebildet, an dem weitere, nachstehend zu erläuternde Funktionseinrichtungen befestigt sind. Der sich im Wesentlichen über die gesamte Länge des Kragarms 12 erstreckende Grundkörper 16 ist vorzugsweise einstückig aus einem faserverstärkten Kunststoff, insbesondere einem Kohlenstofffaserverstärkten Kunststoff (CFK) beispielsweise auf Epoxidharzbasis gefertigt. Zur Erzielung einer maximalen Stabilität ist der Grundkörper 16, wie aus Fig. 2 ersichtlich, in seinem unteren Bereich 48 im Querschnitt konvex gewölbt und in seinen oberen und unteren Bereichen 21, 48 gegenüber den Seitenwänden 39, 40 verstärkt ausgeführt.

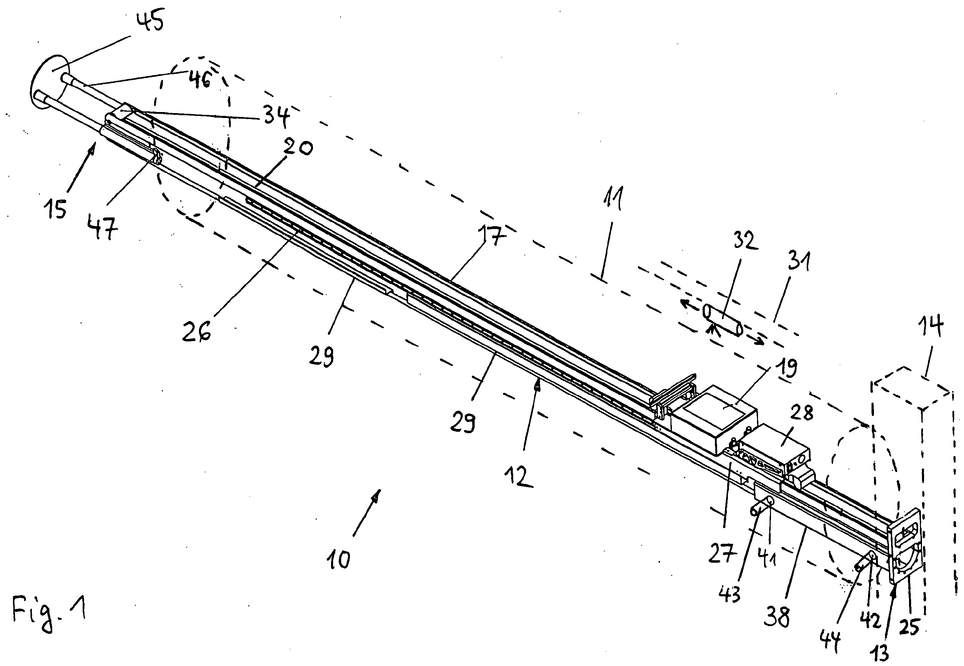

An dem Grundkörper 16 des Kragarms 12 ist eine sich entlang des Kragarms 12 beidseitig erstreckende Linearführung 26 angebracht, in der ein Schlitten 27 oberhalb des Kragarms 12 längsverschiebbar geführt ist. Auf einer Grundplatte 33 des Schlittens 27 ist ein elektrischer Röntgendetektor 19 und beispielsweise ein Elektronikmodul 28 zur Versorgung und Steuerung desselben montiert. Für die elektrischen Versorgungs- und Signalleitungen sind entlang des Kragarms 12 beispielsweise seitlich Stützprofile 29 für entsprechende, in den Figuren nur angedeutete Kabelketten 30 angebracht. Oberhalb des Kragarms 12 ist eine an einem nur schematisch angedeuteten Tragprofil 31 längsverschiebbar angebrachte Röntgenröhre 32 angeordnet. Zur Röntgenprüfung einer Längsschweißnaht eines über den Kragarm 12 geschobenen Rohres 11, wie in Fig. 1 angedeutet, werden der Schlitten 27 mit dem Röntgendetektor 19 und die Röntgenröhre 32 simultan entlang dem Kragarm 12 bzw. dem Tragprofil 31 verschoben.

Alternativ ist eine im Inneren des Grundkörpers 16 geführte Anordnung des Röntgendetektors 19 denkbar.

In einer alternativen Ausführungsform kann stattdessen die Röntgenröhre 32 auf dem Schlitten 27 und der Röntgendetektor 19 an dem Tragprofil 31 montiert sein. In einer weiteren alternativen Ausführungsform kann eine Röntgeneinrichtung, insbesondere die Röntgenröhre 32, fest im Bereich des freien Endes 15 des Kragarms 12 montiert sein. Der Kragarm 12 ist dann zweckmäßigerweise entweder insgesamt verschiebbar oder als Teleskoparm ausgebildet.

Die Verschiebung des Schlittens 27 erfolgt in dem vorliegenden Ausführungsbeispiel mittels eines Transportmittels, hier eines Transportbands 20, das beispielsweise in einem entlang des Kragarms 12 angeordneten Führungsprofil 17 geführt ist und von einem nicht gezeigten Motor angetrieben wird. Das Transportband 20 ist vorzugsweise auf der Oberseite 21 des Grundkörpers 16 angeordnet, die daher vorzugsweise überwiegend flach ausgebildet ist, wie aus Fig. 2 ersichtlich ist. Zur Rückförderung des Förderbandes 20 kann insbesondere im Inneren des Grundkörpers 16 ein entsprechendes Führungsprofil 22 vorgesehen sein, das beispielsweise von einem mittels Befestigungsmitteln 23 an dem Grundkörper 16 befestigten Halter 24 gehalten wird. Im Bereich des freien Endes 15 des Kragarms 12 ist eine Umlenkrolle 34 für das Transportband 20 angeordnet. Eine entsprechende Umlenkrolle im Bereich des entgegengesetzten Endes 13 des Kragarms 12 ist in den Figuren nicht gezeigt.

An dem Transportband 20 ist eine Reihe von Filmhaltern 18 über eine der Länge des Kragarms 12 etwa entsprechende Länge angeordnet. Die Filmhalter 18 können eine elastische Schicht 35 beispielsweise aus einem Kunststoffschaum umfassen und weisen jeweils eine Aufnahme 36 für einen Prüffilm, insbesondere einen Röntgenfilm auf. Durch Bestückung der Reihe von Filmhaltern 18 mit Prüffilmen 37 und Verschiebung der Röntgenröhre 32 entlang des Kragarms 12 kann in an sich bekannter Weise eine Schweißnaht eines über den Kragarm 12 geschobenen Rohres 11 geprüft werden. Bei der Prüfung mittels Prüffilmen 37 ist der Röntgendetektor 19 vorzugsweise in eine Parkposition verschoben, die sich vorzugsweise auf dem Kragarm 12 an dem Befestigungsende 13 befindet. Es ist daher vorzugsweise nicht erforderlich, den Schlitten 27 samt Röntgendetektor 19 von dem Kragarm 12 abzunehmen, um eine Prüfung mittels Prüffilmen 37 durchzuführen.

Der Schlitten 27 für den Röntgendetektor 19 wird vorzugsweise mittels des Transportbands 20 entlang dem Kragarm verschoben. Insbesondere kann der Schlitten 27 mit dem Transportband 20 in geeigneter Weise verbunden sein, beispielsweise an zwei Enden des Transportbands 20. Das Transportband 20 übernimmt demgemäß vorzugsweise die Funktionen Aufnahme und Transport von Filmträgern 37 und Antrieb des Schlittens 27 für den Röntgendetektor 19.

Um eine stabile Aufhängung des Kragarms 12 an dem Traggestell 14 zu erreichen, ist an dem Befestigungsende 13 des Kragarms 12 vorzugsweise eine Verstärkung 38 des Grundkörpers 16 vorgesehen, über einen Längenabschnitt von beispielsweise mindestens 0.5 m erstreckt. In dem Ausführungsbeispiel der Figuren handelt es sich um eine seitliche Verstärkung 38, die von dem Grundkörper 16 selbst durch eine Aufdickung der Seitenwände 39, 40 gebildet wird. Auch eine im Querschnitt U-förmige oder O-förmige Verstärkung ist beispielsweise denkbar. Des Weiteren kann es sich auch um separate Verstärkungen, beispielsweise metallische Schienen handeln, die um den Grundkörper 16 gepasst sind.

Der Grundkörper 16 weist im Bereich der Verstärkung 38 durchgehende Querbohrungen 41, 42 zur Aufnahme von durchgängigen Befestigungselementen 43, 44 beispielsweise in Form metallischer Bolzen auf, die zur Verankerung an dem Traggestell 14 dienen, wodurch eine sehr stabile Befestigung des Kragarms 12 erreicht wird. Die Befestigungselemente 43, 44 können beispielsweise an den Grundkörper 16 anvulkanisiert sein.

An dem freien Ende 15 des Kragarms 12 ist eine Prallplatte 45 angebracht, die mittels nicht gezeigter Federn vorgespannten Führungen 46 längsverschiebbar geführt ist. Eine Kollision der Prallplatte 45 mit einem Hindernis führt mithilfe eines aufgrund einer Verschiebung der Prallplatte 45 betätigten Schalters 47 beispielsweise zu einer Notabschaltung des Systems.

## Patentansprüche

1. Vorrichtung (10) zum Prüfen und/oder Schweißen eines Rohres (11) entlang einer Schweißnaht, umfassend einen zur freitragenden Aufhängung eingerichteten, zum Einbringen in das Innere des Rohres (11) vorgesehenen Kragarm (12) mit einem rohrförmigen Grundkörper (16), und an dem Kragarm (12) angeordnete Tragmittel (18; 27) für eine Prüf- und/ oder Schweißeinrichtung (19; 37), **dadurch gekennzeichnet, dass** der Grundkörper (16) des Kragarms (12) im Wesentlichen aus einem faserverstärkten Kunststoff gefertigt ist, und in Richtung zu einem freien Ende (15) hin eine im Wesentlichen kontinuierlich abnehmende Materialstärke aufweist.

2. Vorrichtung nach Anspruch 1, wobei der Grundkörper (16) im Wesentlichen aus einem kohlenstofffaserverstärkten Kunststoff gefertigt ist.

3. Vorrichtung nach einem der vorangehenden Ansprüche, wobei der Grundkörper (16) im Wesentlichen aus einem faserverstärkten Duroplastwerkstoff bzw. einem faserverstärkten Epoxidharz gefertigt ist.

4. Vorrichtung nach einem der vorangehenden Ansprüche, wobei die Unterseite (48) des Grundkörpers (16) im Querschnitt im Wesentlichen konvex gewölbt ist.

5. Vorrichtung nach einem der vorangehenden Ansprüche, wobei die Oberseite (21) des Grundkörpers (16) im Querschnitt im Wesentlichen flach ist.

6. Vorrichtung nach einem der vorangehenden Ansprüche, wobei Ober- und Unterseiten (21, 48) des Grundkörpers gegenüber Seitenwänden (39, 40) verstärkt sind.

7. Vorrichtung nach einem der vorangehenden Ansprüche, wobei das Tragmittel einen längsverschiebbar geführten Schlitten (27) für eine Prüf- und/oder Schweißeinrichtung (19) umfasst.

8. Vorrichtung nach einem der vorangehenden Ansprüche, wobei in dem Grundkörper (16) mindestens eine Querbohrung zur Aufnahme mindestens eines Befestigungselements (43, 44) vorgesehen ist.

9. Vorrichtung nach einem der vorangehenden Ansprüche, wobei an dem Grundkörper (16) im Bereich des Befestigungsendes (13) eine Verstärkung (38) vorgesehen ist.

## Claims

1. A device (10) for inspecting and/or welding a tube (11) along a welding seam, comprising a cantilever arm (12) with a tubular basic body (16) configured for cantilevered suspension and provided for insertion into the interior of the tube (11), and carrying means (18; 27) disposed on the cantilever arm (12) for an inspection and/or welding device (19; 37), **characterized in that** the basic body (16) of the cantilever arm (12) is substantially made of a fiber reinforced plastic and has a continuously decreasing material thickness in the direction towards a free end (15).

2. The device according to claim 1, wherein the basic body (16) is substantially made of a carbon fiber reinforced plastic.

3. The device according to any ane of the preceding claims, wherein the basic body (16) is substantially made of a fiber reinforced thermosetting material or a fiber reinforced epoxy resin.

4. The device according to any one of the preceding claims, wherein the underside (48) of the basic body (16) is substantially convexly curved in cross section.

5. The device according to any one of the preceding claims, wherein the top side (21) of the basic body (16) is substantially flat in cross section.

6. The device according to any one of the preceding claims, wherein the top and undersides (21, 48) of the basic body are reinforced compared with the side walls (39, 40).

7. The device according to any one of the preceding claims, wherein the carrying means comprises a carriage (27) for an inspection and/or welding device (19) that is guided in a longitudinally displaceable manner.

8. The device according to any one of the preceding claims, wherein at least one cross bore for accommodating at least one fastening member (43, 44) is provided in the basic body (16).

9. The device according to any one of the preceding claims, wherein a reinforcement (38) is provided on the basic body (16) in the region of the fastening end (13).

## Revendications

1. Dispositif (10) de contrôle et/ou de soudage d'un tuyau (11) le long d'un cordon de soudure, comprenant un bras en porte à faux (12) qui est agencé pour être suspendu en porte à faux et prévu pour être introduit dans l'intérieur du tuyau (11) et qui comprend un corps de base (16) tubulaire, et des moyens de support (18; 27) pour un dispositif de contrôle et/ou de soudage (19; 37) qui sont disposés sur ledit bras en porte à faux (12), **caractérisé par le fait que** ledit corps de base (16) du bras en porte à faux (12) est réalisé pour l'essentiel à partir d'une matière plastique renforcée de fibres et présente, en direction d'une extrémité libre (15), une épaisseur de matière qui diminue pour l'essentiel de façon continue.

2. Dispositif selon la revendication 1, dans lequel le corps de base (16) est réalisé pour l'essentiel à partir d'une matière plastique renforcée de fibres de carbone.

3. Dispositif selon l'une quelconque des revendications précédentes, dans lequel le corps de base (16) est réalisé pour l'essentiel à partir d'un matériau thermodurcissable renforcé de fibres ou bien d'une résine époxy renforcée de fibres.

4. Dispositif selon l'une quelconque des revendications précédentes, dans lequel, en coupe transversale, la face inférieure (48) du corps de base (16) est bombée de manière pour l'essentiel convexe.

5. Dispositif selon l'une quelconque des revendications précédentes, dans lequel, en coupe transversale, la face supérieure (21) du corps de base (16) est pour l'essentiel plate.

6. Dispositif selon l'une quelconque des revendications précédentes, dans lequel les faces supérieure et inférieure (21, 48) du corps de base sont renforcées par rapport à des parois latérales (39, 40).

7. Dispositif selon l'une quelconque des revendications précédentes, dans lequel le moyen de support comprend un chariot (27) guidé à déplacement longitudinal pour un dispositif de contrôle et/ou de soudage (19).

8. Dispositif selon l'une quelconque des revendications précédentes, dans lequel au moins un perçage transversal destiné à recevoir au moins un élément de fixation (43, 44) est prévu dans le corps de base (16).

9. Dispositif selon l'une quelconque des revendications précédentes, dans lequel un renforcement (38) est prévu sur le corps de base (16) au niveau de l'extrémité de fixation (13).
